# EUROPÄISCHE PATENTANMELDUNG

(11) **EP 1 787 778 A2**
(43) Veröffentlichungstag der Anmeldung: **23.05.2007**
(21) Anmeldenummer: 06121940.8
(22) Anmeldetag: 09.10.2006
(51) Int. Cl.: B28B 3/26, B28B 3/20

(54) **Extrusionswerkzeug, insbesondere zur Herstellung von keramischen Filterelementen**

(30) Priorität: 18.11.2005 DE 102005055070
(71) Anmelder: ROBERT BOSCH GMBH, 70442 Stuttgart (DE)
(72) Erfinder: Reinsch, Bernd, 71642, Ludwigsburg (DE); Komori, Teruo, 70378, Stuttgart (DE); Thuener, Lars, 70176, Stuttgart (DE); Mattern, Andreas, 76137, Karlsruhe (DE)

(57) **Zusammenfassung**

Es wird ein Extrusionswerkzeug vorgeschlagen, mit dessen Hilfe nahezu beliebig prismatische Körper geformt werden können. Dabei sind die Herstellungskosten des erfindungsgemäßen Extrusionswerkzeugs relativ gering und die erzielbare Genauigkeit bei der Herstellung des Extrusionswerkzeugs ist sehr hoch.

## Beschreibung

### Stand der Technik

Die Erfindung betrifft ein Extrusionswerkzeug zur Herstellung von prismatischen Körpern, insbesondere zur Herstellung von Filterelementen aus keramischen Werkstoffen.

Keramische Filterelemente werden in Abgasnachbehandlungsanlagen von Brennkraftmaschinen, insbesondere als Rußfilter bei Dieselbrennkraftmaschinen, eingesetzt.

Aufgrund der hohen Betriebstemperaturen, den komplexen physikalischen und chemischen Vorgängen bei der Filterung und Reinigung der Abgase sowie der inhomogenen Temperaturverteilung innerhalb des Filterelements werden die Geometrien der Filterelemente immer komplizierter.

Der Erfindung liegt die Aufgabe zugrunde, ein Extrusionswerkzeug bereitzustellen, welches größtmögliche Freiheiten bei der Gestaltung der Querschnitte der extrudierten Filterelemente bietet und gleichzeitig die Herstellung prismatischer Filterelemente mit größter Genauigkeit ermöglicht.

Diese Aufgabe wird erfindungsgemäß gelöst durch ein Extrusionswerkzeug mit einem Grundkörper mit einer Austrittsfläche, wobei die Austrittsfläche mindestens eine Austrittsöffnung aufweist, mit mindestens einem in dem Grundkörper angeordneten Kanal, wobei die mindestens eine Austrittsöffnung über den mindestens einen Kanal mit dem zu extrudierenden Material versorgt wird, und mit mehreren Profilplatten, wobei die Profilplatten eine Außenkontur aufweisen und an dem Grundkörper befestigt sind, und wobei die Spalten zwischen den Profilplatten dem zu extrudierenden Werkstück die gewünschte Form geben.

### Vorteile der Erfindung

Dadurch, dass die formgebenden Spalte durch die an dem Grundkörper befestigten Profilplatten gebildet werden, bestehen nahezu unbegrenzte Möglichkeiten der Formgebung. So ist es beispielsweise möglich, die Wandstärke der Filterwände im Zentrum des Filters anders zu wählen als an dessen äußerem Rand. Außerdem gibt es nahezu keine Restriktionen bezüglich der Querschnittsflächen der Kanäle in dem Filterelement, und es können ohne weiteres verschiedene Kanalquerschnitte in einem Extrusionswerkzeug hergestellt werden.

Des Weiteren erlaubt das erfindungsgemäße Extrusionswerkzeug eine Rationalisierung der Werkzeugherstellung, da der Grundkörper aus einem verhältnismäßig preiswerten Werkstoff und mit geringeren Anforderungen an die Genauigkeit hergestellt werden kann. Erst durch das Anbringen verschieden geformter Profilplatten erhält das erfindungsgemäße Extrusionswerkzeug die für den speziellen Einsatz benötigte Form.

Es hat sich als besonders vorteilhaft erwiesen, wenn die Profilplatten aus Hartmetall hergestellt werden, da dieser Werkstoff extrem verschleißbeständig ist und deshalb die Herstellung von Extrusionswerkzeugen mit sehr hohen Standzeiten ermöglicht.

Die Profilplatten, insbesondere die Profilplatten aus Hartmetall, können beispielsweise durch Löten oder andere stoffschlüssige Fügverfahren mit dem Grundkörper verbunden werden. Denkbar ist es aber auch, die Profilplatten, wie eine Schneidplatte eines Drehmeißels mittels einer Schraube an dem Grundkörper zu befestigen. Dadurch wird das Auswechseln verschlissener Profilplatten erleichtert.

Um eine möglichst gleichmäßige Verteilung des zu extrudierenden Werkstoffs über die gesamte Austrittsfläche des Extrusionswerkzeugs zu ermöglichen, sind in dem Grundkörper mehrere, vorzugsweise parallel zueinander angeordnete Kanäle vorgesehen.

Eine weitere Vergleichmäßigung der Verteilung des zu extrudierenden Materials auf die Austrittsfläche des Extrusionswerkzeugs wird dadurch erreicht, dass zwischen den Profilplatten und dem oder den Kanälen mehrere Nuten vorgesehen sind, welche den zu extrudierenden Werkstoff von den oder den Kanälen auf die Spalten zwischen den Profilplatten gleichmäßig verteilen.

Es hat sich weiter als vorteilhaft erwiesen, wenn zwischen dem oder den Kanälen und den Nuten ein kegelstumpfförmiger Übergangsbereich vorgesehen ist, da auf diese Weise das zu extrudierende Material mit geringst möglichem Aufwand durch das Extrusionswerkzeug gepresst werden kann.

Um die Präzision des Extrusionswerkzeugs zu erhöhen, ist es vorteilhaft, wenn die Außenkontur der Profilplatten nach dem Befestigen auf dem Grundkörper in die endgültige Form gebracht wird. Dadurch können Positionierfehler, die sich beim Löten bisweilen einstellen, ausgeglichen werden und es kann ein Extrusionswerkzeug mit extrem hoher Genauigkeit hergestellt werden.

Dabei hat es sich als vorteilhaft erwiesen, wenn die Außenkontur der Profilplatten durch Erodieren in die endgültige Form gebracht wird.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

Zeichnungen

Es zeigen:
- Figur 1: einen Querschnitt durch ein Ausführungsbeispiel eines erfindungsgemäßen Extrusionswerkzeugs,
- Figur 2: einen Schnitt entlang der Linie A-A,
- Figur 3: einen Schnitt entlang der Linie B-B und
- Figur 4: eine Ansicht von vorne auf eine erfindungsgemäßes Extrusionswerkzeug.

### Beschreibung des Ausführungsbeispiels

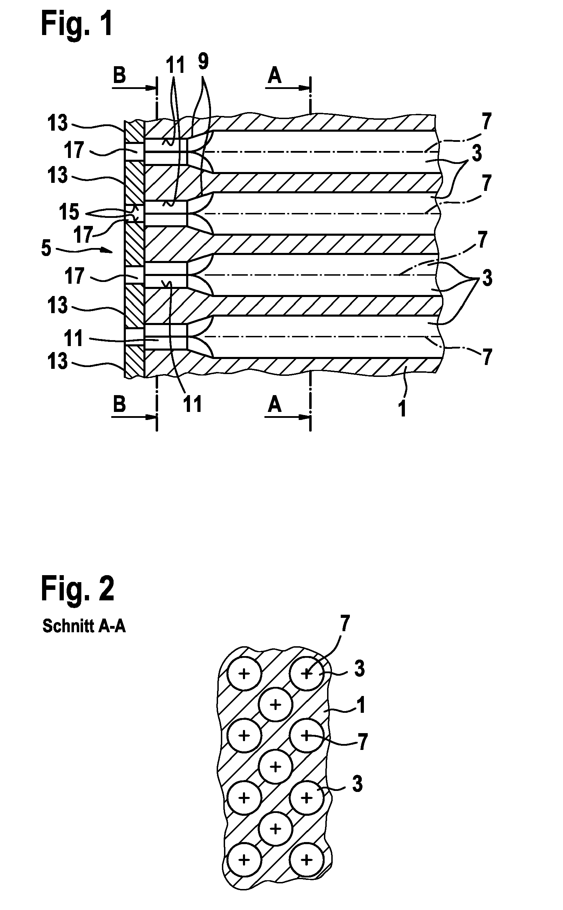

In Figur 1 ist ein erfindungsgemäßes Extrusionswerkzeug in einem Teilschnitt dargestellt. Das Extrusionswerkzeug besteht im Wesentlichen aus einem Grundkörper 1, in den mehrere parallel zueinander verlaufende Kanäle 3 eingebracht sind. Die Kanäle 3 haben die Form einer zylindrischen Bohrung und dienen dazu, das zu extrudierende Material (nicht dargestellt) durch den Grundkörper 1 hindurch zu einer Austrittsfläche 5 zu befördern.

An der Austrittsfläche 5 wird das Material in die gewünschte Form gebracht. Die Längsachsen der Kanäle sind in der Figur 1 mit dem Bezugszeichen 7 versehen worden. Das zu extrudierende Material (nicht dargestellt) wird von einer ebenfalls nicht dargestellten Extruderschnecke oder einer vergleichbaren Einrichtung in Figur 1 von rechts nach links durch das Extrusionswerkzeug gepresst.

An die Kanäle 3 schließt sich ein kegelstumpfförmiger Abschnitt 9 an, der in Nuten 11 mündet. Die Nuten 11 dienen dazu, das zu extrudierende Material gleichmäßig über den gesamten Querschnitt des Extrusionswerkzeugs zu verteilen.

An dem Grundkörper 1 sind im Bereich der Austrittsfläche 5 Profilplatten 13 angelötet. Diese Profilplatten 13 sind bevorzugt aus Hartmetall, da Hartmetall sehr verschleißbeständig ist. Selbstverständlich können aber auch andere verschleißbeständige Werkstoffe, wie zum Beispiel Keramik, zum Einsatz kommen.

Die Profilplatten 13 haben eine Außenkontur 15, von denen in Figur 1 aus Gründen der Übersichtlichkeit nicht alle mit Bezugszeichen versehen wurden. Zwischen den Außenkonturen 15 zweier benachbarter Profilplatten 13 ist ein Spalt 17 vorhanden. Die Dicke des Spaltes 17 entspricht letztendlich der Wanddicke des mit Hilfe des erfindungsgemäßen Extrusionswerkzeugs hergestellten Körpers, während die Aueßnkontur 15 der Profilplatten 13 den Querschnitt der Kanäle in dem durch Extrudieren hergestellten Werkstück bestimmt.

Durch die Verwendung von Profilplatten 13, die auf den Grundkörper 1 befestigt werden, ist es möglich, die am stärksten von Verschleiß gefährdeten Bereiche des Extrusionswerkzeugs an der Austrittsfläche 5 aus einem sehr hochwertigen und verschleißfesten Material herzustellen, während der weniger beanspruchte Grundkörper aus einem preiswerteren Material hergestellt werden kann. Außerdem ist es durch die Verwendung eines weniger verschleißfesten Materials beim Grundkörper möglich, die Fertigungskosten für das Herstellen des Grundkörpers 1 zu reduzieren.

Zwischen dem Grundkörper 1 und der Außenkontur 15 der Profilplatten 13 stellt sich in der Regel ein Absatz ein, da die Nuten 11 breiter sind als die Spalte 17. Dadurch ist gewährleistet, dass die Formgebung des Werkstücks ausschließlich durch die Spalte 17 und nicht durch die Nuten 11 erfolgt.

An dem Absatz zwischen den Nuten 11 und den Außenkonturen 15 der Profilplatten 13 stellt sich naturgemäß ein relativ hoher Verschleiß ein, der jedoch unkritisch ist, weil die Formgebung nicht an dieser Kante erfolgt, sondern an der Austrittsfläche 5, so dass die Maßhaltigkeit des erfindungsgemäßen Extrusionswerkzeugs auch nach längerem Gebrauch noch gewährleistet ist.

In Figur 2 ist ein Schnitt entlang der Linie A-A dargestellt. Aus dieser Darstellung ist ersichtlich, dass die Kanäle 3 gleichmäßig über den Querschnitt des Grundkörpers 1 verteilt sind und so dafür sorgen, dass über den gesamten Querschnitt des Extrusionswerkzeugs gleich viel Material zum Extrudieren zur Verfügung steht.

Aus Gründen der Übersichtlichkeit sind nicht alle Kanäle 3 und Längsachsen 7 mit Bezugszeichen versehen.

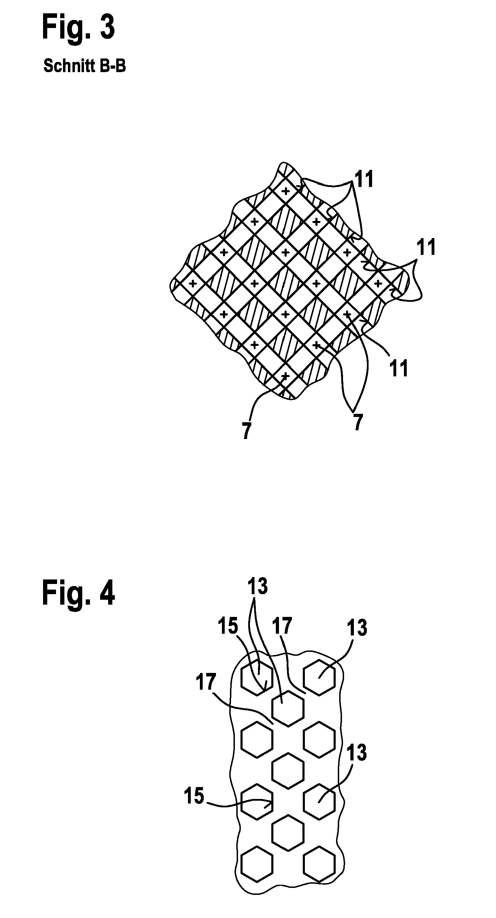

In Figur 3 ist ein Schnitt entlang der Linie B-B durch den Grundkörper 1 dargestellt. Aus dieser Ansicht wird deutlich, dass der Grundkörper 1 von einem Netz von Nuten 11 durchzogen ist, wobei die Längsachsen 7 der Kanäle 3 in den Schnittpunkten senkrecht zueinander verlaufenden Nuten 11 jeweils liegen.

An den erhabenen Flächen (ohne Bezusgzeichen) zwischen den Nuten 11, die in Figur 3 schraffiert dargestellt sind, werden die Profilplatten 13 aufgelötet. Aus Gründen der Übersichtlichkeit sind nicht alle Nuten 11 und Längsachsen 7 in Figur 3 mit Bezugszeichen versehen.

In Figur 4 ist eine Ansicht von vorne auf ein erfindungsgemäßes Extrusionswerkzeug dargestellt, bei dem die Profilplatten 13 die Form eines Sechsecks haben. Diese Form ist nur als Beispiel gedacht und die Erfindung ist nicht auf Profilplatten 13 mit sechseckiger Außenkontur 15 beschränkt. Es sind vielmehr beliebig geformte Profilplatten 13 einsetzbar.

Zwischen den Außenkonturen 15 der Profilplatten 13 verbleiben die bereits im Zusammenhang mit Figur 1 erwähnten Spalte 17. Auch in Figur 4 sind nicht alle Profilplatten 13, alle Außenkonturen 15 und alle Spalte 17 mit Bezugszeichen versehen.

Durch den Vergleich der Figuren 3 und 4 wird deutlich, dass der Grundkörper 1 mit seinen Kanälen 3 und den Nuten 11 im Wesentlichen die Funktion hat, das zu extrudierende Material gleichmäßig über die Austrittsfläche 5 des Extrusionswerkzeugs zu verteilen und die Formgebung des zu extrudierenden Werkstücks durch die aufgesetzten Profilplatten 13 beziehungsweise die Spalte 17 zwischen den Profilplatten 13 bestimmt wird.

Dadurch ist es möglich, die am stärksten von Verschleiß betroffenen Partien des Extrusionswerkzeugs, nämlich die Außenkonturen 15, aus einem extrem verschleißbeständigen Material zu machen. Außerdem können die Profilplatten 13, die naturgemäß relativ kleine Abmessungen haben, mit nahezu allen bekannten Herstellungsverfahren hergestellt werden.

Da beim Befestigen der Profilplatten 13 auf dem Grundkörper 1 Ungenauigkeiten bei der Positionierung der Profilplatten 13 auftreten können, ist erfindungsgemäß vorgesehen, die Profilplatten 13 als Rohlinge auf dem Grundkörper aufzulöten oder in einer sonstigen Weise auf dem Grundkörper 1 zu befestigten und erst nach erfolgter Befestigung die Außenkontur 15 fertig zu bearbeiten. Dabei ist es möglich, wegen des kleinen abzutragenden Volumens, beispielsweise die Außenkontur 15 mit Hilfe einer Erodiermaschine herzustellen. Um die Positionsabweichungen der Profilplatten 13 beim Auflöten oder sonstigen Befestigen zu minimieren, können zwischen den Profilplatten 13 Platzhalter vorgesehen sein, ähnlich wie es beim Verlegen von Fliesen üblich ist.

Wenn die Kanalquerschnitte des extrudierten Filterelements unterschiedlich sind, kann über eine Anpassung der Kanäle 3 und Nuten 11 bezüglich Zahl, Länge und Querschnitt der Druckverlust, den das zu extrudierende Material im Extrusionswerkzeug erfährt, eingestellt werden. Dadurch wird die Extrusion vergleichmäßigt, was sich positiv auf die Qualität der zu extrudierenden Filterelemenete auswirkt.

## Patentansprüche

1. Extrusionswerkzeug mit einem Grundkörper (1), mit einer Austrittsfläche (5), mit mindestens einem in dem Grundkörper (1) angeordneten Kanal (3), wobei die mindestens eine Austrittsöffnung über den mindestens einen Kanal (3) mit dem zu extrudierenden Material versorgt wird, und mit mehren Profilplatten (13), wobei die Profilplatten (13) eine Außenkontur (15) aufweisen und an dem Grundkörper (1) befestigt sind, und wobei die Spalte (17) zwischen den Profilplatten (13) dem zu extrudierenden Werkstoff die gewünschte Form geben.

2. Extrusionswerkzeug nach Anspruch 1, **dadurch gekennzeichnet, dass** die Profilplatten (13) aus Hartmetall hergestellt werden.

3. Extrusionswerkzeug nach Anspruch 1 oder 2, **dadurch gekennzeichnet, dass** die Profilplatten (13) durch Schweißen oder Löten mit dem Grundkörper (1) verbunden werden.

4. Extrusionswerkzeug nach Anspruch 1 oder 2, **dadurch gekennzeichnet, dass** die Profilplatten (13) durch eine oder mehrere Schrauben mit dem Grundkörper (1) verbunden werden.

5. Extrusionswerkzeug nach einem der vorhergehenden Ansprüche, **dadurch gekennzeichnet, dass** in dem Grundkörper (1) mehrere Kanäle (3) vorgesehen sind, und dass die Kanäle (3) parallel zueinander verlaufen.

6. Extrusionswerkzeug nach einem der vorhergehenden Ansprüche, **dadurch gekennzeichnet, dass** zwischen den Profilplatten (13) und dem mindestens einen Kanal (3) mehrere Nuten (11) vorgesehen sind, und dass die Nuten (11) den zu extrudierenden Werkstoff von dem oder den Kanälen (3) auf die Spalten (17) verteilen.

7. Extrusionswerkzeug nach einem der vorhergehenden Ansprüche, **dadurch gekennzeichnet, dass** zwischen dem oder den Kanälen (3) und den Nuten (11) ein kegelstumpfförmiger Übergangsbereich (9) vorgesehen ist.

8. Extrusionswerkzeug nach einem der vorhergehenden Ansprüche, **dadurch gekennzeichnet, dass** die Außenkontur (15) der Profilplatten (13) nach dem Befestigen der Profilplatten (13) auf dem Grundkörper (1) in die endgültige Form gebracht wird.

9. Extrusionswerkzeug nach Anspruch 8, **dadurch gekennzeichnet, dass** die Außenkontur (15) der Profilplatten (13) durch Erodieren in die endgültige Form gebracht wird.

10. Extrusionswerkzeug nach einem der vorhergehenden Ansprüche, **dadurch gekennzeichnet, dass** es zur Herstellung von keramischen Filtern, insbesondere aus Cordierit oder Siliziumcarbid, geeignet ist.
